# EUROPEAN PATENT APPLICATION

(11) **EP 3 492 895 A1**
(43) Date of publication of application: **05.06.2019**
(21) Application number: 17836541.7
(22) Date of filing: 28.02.2017
(51) Int. Cl.: G01L 13/00, G01L 19/14

(54) **PRESSURE SENSOR AND PRESSURE SENSOR MODULE**

(30) Priority: 01.08.2016 JP 2016151596
(71) Applicant: Alps Alpine Co., Ltd., Ota-ku, Tokyo 1458501 (JP)
(72) Inventor: OKAWA, Hisanobu, Tokyo 145-8501 (JP); KERA, Chiaki, Tokyo 145-8501 (JP); GOCHO, Hideki, Tokyo 145-8501 (JP); SEJIMO, Kazushige, Tokyo 145-8501 (JP)
(74) Representative: Schmitt-Nilson Schraud Waibel Wohlfrom Patentanwälte Partnerschaft mbB
(86) International application number: PCT/JP2017/007888
(87) International publication number: WO 2018/025434

(57) **Abstract**

[Object] To provide a pressure sensor and a pressure sensor module that have simple structures and are highly resistant to pressure.

[Solution] A pressure sensor according to the present invention includes a first detection unit that is disposed in a first region and that detects an absolute value of a pressure of a first medium, a second detection unit that is disposed in a second region separated from the first region and that detects an absolute value of a pressure of a second medium that differs from the first medium, and a calculation unit that performs a calculation to obtain a difference between a first pressure detected by the first detection unit and a second pressure detected by the second detection unit.

## Description

### Technical Field

The present invention relates to pressure sensors and pressure sensor modules, and more particularly, to a pressure sensor and a pressure sensor module that have two detection units that detect pressure of respective media that differ from each other.

### Background Art

PTL 1 discloses a configuration of a pressure sensor that determines an absolute pressure of a pressure medium with respect to a vacuum pressure by using the difference between a pressure detected by a first sensing unit and a pressure detected by a second sensing unit and the difference between the pressure detected by the first sensing unit and a pressure detected by a third sensing unit. Each of the first sensing unit and the second sensing unit in this pressure sensor has a protecting member to protect a pressure-receiving surface from the pressure medium.

PTL 2 discloses a pressure sensor which includes a casing in which a first pressure cavity and a second pressure cavity into which respective pressure media are introduced are desposed, a first sensor chip and a second sensor chip that have the same characteristics, protecting members for protecting the respective sensor chips, and vibration-constraint members for constraining the respective protecting members from moving. This pressure sensor reduces an effect of external stress, such as vibration, to which the plurality of sensor chips, which have the protecting members on the pressure-receiving surfaces, are subjected.

PTL 3 discloses a flow rate sensor which includes a casing exposed to a fluid, a first container space and a second container space that are disposed in the casing, a dynamic pressure introduction port disposed at the leading edge of the casing, a static pressure introduction port disposed on a side of the casing, a first pressure-receiving sensor contained in the first container space, and a second pressure-receiving sensor contained in the second container space. The dynamic pressure introduction port of this flow rate sensor is directed in a fluid flow direction, and the static pressure introduction port of this flow rate sensor is directed in the direction substantially perpendicular to the fluid flow direction. Thus, one of the plurality of pressure-receiving sensors does not affect a pressure change detected by the other of the plurality of pressure-receiving sensors.

### Citation List

### Patent Literature

PTL 1: Japanese Unexamined Patent Application Publication No. 2007-003383
PTL 2: Japanese Unexamined Patent Application Publication No. 2008-304245
PTL 3: Japanese Unexamined Patent Application Publication No. 2012-189349

### Summary of Invention

### Technical Problem

In a pressure sensor, a diaphragm, which undergoes displacement due to a pressure applied by a medium, is disposed in a detecting element that detects the pressure of the medium. A detecting element of a relative type detects the difference between a pressure of a medium on one side of a diaphragm and a pressure of a medium on the other side of the diaphragm. In a pressure sensor using such a detecting element, a single detecting element can detect a relative pressure of a medium with respect to a pressure of another medium.

However, when a diaphragm is deformed into a convex shape, tensile stress is likely to be concentrated at a portion connecting the diaphragm and a support member. Consequently, ensuring that a diaphragm has sufficient strength is required for a pressure sensor for detecting a pressure of a medium in which an abrupt pressure change, such as an impact pressure, can occur.

The present invention provides a pressure sensor and a pressure sensor module that have simple structures and are highly resistant to pressure.

### Solution to Problem

In view of the foregoing issues, a pressure sensor according to the present invention includes a first detection unit that is disposed in a first region and that detects an absolute value of a pressure of a first medium, a second detection unit that is disposed in a second region separated from the first region and that detects an absolute value of a pressure of a second medium that differs from the first medium, and a calculation unit that performs a calculation to obtain a difference between a first pressure detected by the first detection unit and a second pressure detected by the second detection unit.

Such a configuration, in which the first detection unit and the second detection unit detect absolute values of respective pressures, can increase the pressure resistance of a diaphragm compared with a detection unit that detects a relative pressure. In addition, the first region in which the first detection unit is disposed and the second region in which the second detection unit is disposed are separated from each other, and thus the mixing of the first medium and the second medium can be suppressed even when the pressure resistance of the detection units is exceeded.

The pressure sensor according to the present invention may further include a substrate and a package that covers at least a portion of the substrate and exteriors of the first detection unit, the second detection unit, and the calculation unit, and the package may include a partition that separates the first region from the second region. In this way, separation between the first region and the second region is ensured by using the partition of the package.

In the pressure sensor according to the present invention, the first detection unit, the second detection unit, and the calculation unit may be disposed on a first surface side, the first surface side being a surface of the substrate. In this way, the first detection unit, the second detection unit, and the calculation unit are disposed on the same surface side of the substrate (first surface side), and thus the structure and component mounting can be simplified.

In the pressure sensor according to the present invention, the package may have a through hole that connects the second region to a space outside the package. In this way, a medium outside the package is introduced as the second medium into the second region through the through hole, and the second detection unit can detect the pressure outside the package.

In the pressure sensor according to the present invention, the package may have an introduction hole that is disposed on the first surface side of the substrate and that enables a pressure of the first medium to be introduced to the first region. In this way, the first medium is introduced into the first region from the first surface side of the substrate through the introduction hole, and the first detection unit can detect the pressure of the first medium.

In the pressure sensor according to the present invention, each of the first detection unit and the second detection unit may include a diaphragm that deforms into a concave shape and that detects a pressure. In this way, when the diaphragm is deformed due to a pressure, compressive stress is applied to the diaphragm in the vicinity of a support member. Consequently, the pressure resistance of the diaphragm is improved compared with a case where tensile stress is applied to the diaphragm in the vicinity of the support member.

For the pressure sensor according to the present invention, the first medium may be a liquid, and the second medium may be a gas. In this way, the pressure difference between the liquid and the gas can be detected.

A pressure sensor module according to the present invention includes a substrate, a package that covers at least a portion of the substrate, that forms a first region and a second region on a first surface side, the first surface side being a surface of the substrate, and that includes a partition that separates the first region from the second region, a first detection unit that is disposed in the first region and that detects an absolute value of a pressure of a first medium, a second detection unit that is disposed in the second region and that detects an absolute value of a pressure of a second medium that differs from the first medium, and a calculation unit that is disposed on the first surface side and that performs a calculation to obtain via a wiring pattern a difference between a first pressure detected by the first detection unit and a second pressure detected by the second detection unit. In this pressure sensor module, the package has a through hole that connects the second region to a space outside the package and an introduction hole that is disposed on the first surface side of the substrate and that enables a pressure of the first medium to be introduced to the first region.

Such a configuration enables the package to contain the first detection unit, the second detection unit, and the calculation unit, and thus a pressure sensor can be configured by using a single component. In addition, this configuration, in which the first detection unit and the second detection unit detect absolute values of respective pressures, can increase the pressure resistance of a diaphragm compared with a detection unit that detects a relative pressure. Further, the first region and the second region are separated from each other in the package, and the first detection unit and the second detection unit are disposed in the first region and in the second region, respectively. Thus, the mixing of the first medium and the second medium can be suppressed even when the pressure resistance of the detection units is exceeded.

### Advantageous Effects of Invention

According to the present invention, it is possible to provide a pressure sensor and a pressure sensor module that have simple structures and are highly resistant to pressure. Brief Description of Drawings
Fig. 1 is a schematic cross-sectional view illustrating a pressure sensor according to an embodiment.
Figs. 2(a) to 2(d) are schematic illustrations describing the pressure resistance of detection units.
Figs. 3(a) and 3(b) are perspective views of a specific example of a pressure sensor module.
Figs. 4(a) to 4(c) are schematic cross-sectional views illustrating a method of manufacturing the pressure sensor module.

### Description of Embodiments

Hereinafter, an embodiment of the present invention will be described with reference to the drawings. In the following description, the same or similar components are denoted by the same reference numerals, and a description of a component that has been described once will be omitted where appropriate.

### (Configuration of Pressure Sensor)

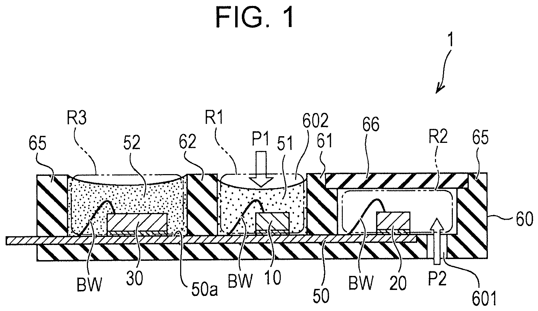

Fig. 1 is a schematic cross-sectional view illustrating a pressure sensor according to the present embodiment.

As depicted in Fig. 1, a pressure sensor 1 according to the present embodiment includes a first detection unit 10 that detects a pressure of a first medium, a second detection unit 20 that detects a pressure of a second medium, and a calculation unit 30 that performs a calculation.

The first detection unit 10 is an absolute pressure sensor that detects an absolute value of the pressure of the first medium. The first detection unit 10 is disposed in a first region R1 in the pressure sensor 1. Further, the second detection unit 20 is an absolute pressure sensor that detects an absolute value of the pressure of the second medium. The second detection unit 20 is disposed in a second region R2 in the pressure sensor 1. The first region R1 and the second region R2 are separated from each other.

An absolute pressure sensor, which constitutes each of the first detection unit 10 and the second detection unit 20, includes a sensor chip having, for example, a diaphragm and a piezoresistive element. An absolute pressure sensor receives the pressure of a medium by using a diaphragm. Stress generated by deformation of the diaphragm is converted into an electric signal by using the piezoresistive element, and the pressure is detected. In an absolute pressure sensor, a diaphragm is disposed on a support member in a deformable fashion. When the diaphragm receives a pressure for detection, the diaphragm deforms toward the support member and forms a concave shape.

The calculation unit 30 performs a calculation to obtain the difference between a first pressure P1 detected by the first detection unit 10 and a second pressure P2 detected by the second detection unit 20. The pressure sensor 1 according to the present embodiment is able to obtain the difference between the first pressure PI, which is the absolute pressure of the first medium detected by the first detection unit 10 and the second pressure P2, which is the absolute pressure of the second medium detected by the second detection unit 20.

The first medium and the second medium, whose pressures are detected by the pressure sensor 1 according to the present embodiment, are different from each other. For example, the first medium is a liquid, and the second medium is a gas. Examples of the first medium, which is a liquid, include water and oil. Examples of the second medium, which is a gas, include air (atmospheric air).

The pressure sensor 1 depicted in Fig. 1 further includes a package 60 and a substrate 50 that has a first surface 50a. For example, a lead frame is used as the substrate 50. The first detection unit 10, the second detection unit 20, and the calculation unit 30 are mounted on the first surface 50a of the substrate 50, which is a lead frame. In other words, the first detection unit 10, the second detection unit 20, and the calculation unit 30 are disposed on the same surface of the substrate 50 (the first surface 50a).

The package 60 covers at least a portion of the substrate 50 and includes a partition 61 for forming the first region R1 and the second region R2 on the first surface 50a side. The partition 61 is a wall separating the first region from the second region. The package 60 also includes a partition 62 for forming a third region R3. The partition 62 is a wall separating the first region R1 from the third region R3. The package 60 is also disposed on the other side of the substrate 50 from the first surface 50a.

An outer frame 65 of the package 60 is disposed on the first surface 50a side. The outer frame 65 and the partition 61 form the second region R2 therebetween, the outer frame 65 and the partition 62 form the third region R3 therebetween, and the partition 61 and the partition 62 form the first region R1 therebetween. The first region R1, the second region R2, and the third region R3, which are formed by the package 60, may be arranged in an order that differs from the order in the above example.

Regarding the first region R1, the second region R2, and the third region R3, which are separated from each other, the first detection unit 10 is disposed in the first region R1, the second detection unit 20 is disposed in the second region R2, and the calculation unit 30 is disposed in the third region R3. Each of the first detection unit 10, the second detection unit 20, and the calculation unit 30 is electrically connected to a lead frame, which is the substrate 50, via, for example, bonding wires BW.

The first detection unit 10, which is disposed in the first region R1, may be covered by a protecting member 51 that fills the first region R1. The calculation unit 30, which is disposed in the third region R3, may be covered by a protecting member 52 that fills the third region R3. Disposing the protecting member 51 prevents the first medium (for example, water or oil) from directly coming into contact with the first detection unit 10. The protecting member 51 is preferably a material softer than the protecting member 52. This is because the pressure of the first medium is to be transferred to the first detection unit 10 via the protecting member 51. A specific example material that forms the protecting member 51 is a silicone resin, and a specific example material that forms the protecting member 52 is an epoxy resin.

A lid 66 is disposed on the second region R2. The lid 66 is attached to the upper portions of the partition 61 and the outer frame 65. The lid 66 enables the second region R2 to become a space closed to the first medium. The package 60 includes a through hole 601 that connects the second region R2 to a space outside the package 60. In this way, a medium outside the package 60 (second medium, such as air) is introduced into the second region R2 through the through hole 601, and the second detection unit 20 detects the second pressure P2 of the second medium.

The through hole 601 is preferably disposed in the package 60 toward the other side of the substrate 50 from the first surface 50a. In this way, when the second medium is introduced into the second region R2 through the through hole 601, the second medium hits the lid 66 and is deflected to the second detection unit 20, smoothing an abrupt application of the pressure to the second detection unit 20.

The package 60 also includes an introduction hole 602 that enables the pressure of the first medium to be introduced into the first region R1. In this way, the pressure of the first medium is introduced into the first region R1 through the introduction hole 602, and the first detection unit 10 detects the first pressure P1 of the first medium.

In the pressure sensor 1 of this type, the first detection unit 10 and the second detection unit 20 are absolute pressure sensors, which detect an absolute value of a pressure, and thus the pressure resistance of diaphragms can be increased compared with a detection unit that detects a relative pressure.

In the pressure sensor 1 according to the present embodiment, the first region R1, in which the first detection unit 10 is disposed, and the second region R2, in which the second detection unit 20 is disposed, are separated from each other. Thus, the mixing of the first medium and the second medium can be suppressed even when the pressure resistance of either the first detection unit 10 or the second detection unit 20 is exceeded.

For example, if the first detection unit 10 is subjected to an abrupt pressure application from the first medium and the diaphragm of the first detection unit 10 is damaged, the first medium does not flow into the second region R2 because the first region R1 and the second region R2 are separated by the partition 61.

In a case of the second region R2 being exposed to atmospheric air, if the first medium flows into the second region R2, the first medium flows out of the through hole 601. In a case of the first region R1 and the second region R2 being separated from each other as in the present embodiment, the first medium does not flow into the second region R2. Thus, if the first detection unit 10 is damaged, the first medium can be prevented from flowing into an outside space.

### (Regarding Pressure Resistance)

Here, the pressure resistance of a detection unit will be described.

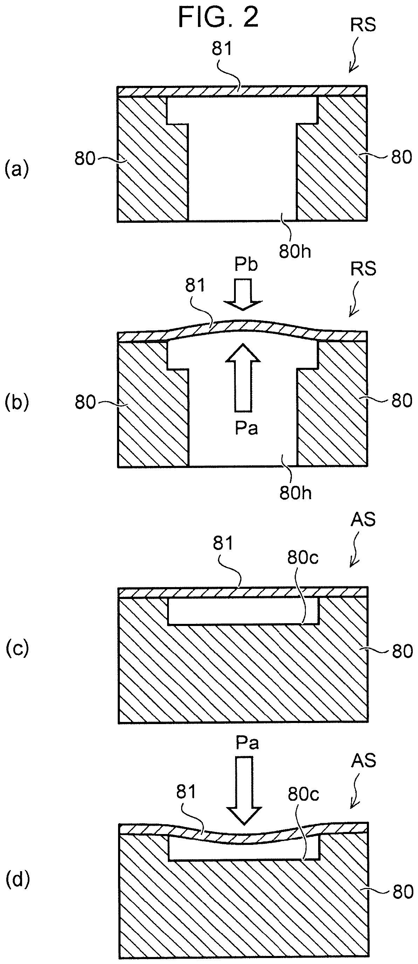

Figs. 2(a) to 2(d) are schematic illustrations describing the pressure resistance of detection units.

Figs. 2(a) and 2(b) illustrate an example of a relative pressure sensor RS, and Figs. 2(c) and 2(d) illustrate an example of an absolute pressure sensor AS.

As illustrated in Fig. 2(a), the relative pressure sensor RS includes a support member 80 and a diaphragm 81. The support member 80 has an introduction hole 80h, and the diaphragm 81 is disposed on the support member 80 so as to cover the introduction hole 80h. As illustrated in Fig. 2(b), the pressure Pa of a medium is transferred to the diaphragm 81 through the introduction hole 80h. If the pressure Pa, which is the pressure on the introduction hole 80h side of the diaphragm 81, is higher than the pressure Pb, which is the pressure of a medium on the other side of the diaphragm 81 from the introduction hole 80h side, the diaphragm 81 deforms into a convex shape. For example, if the pressure Pb is atmospheric pressure and the pressure Pa is a positive pressure, the diaphragm 81 deforms into a convex shape. The stress based on the amount of deformation of the diaphragm 81 is detected by using a piezoresistive element or the like (not shown).

When the diaphragm 81 is deformed into a convex shape in this way, tensile stress is concentrated on a surface on the support member 80 side of the diaphragm 81. If a fragile material, such as silicon, is used for the diaphragm 81, the concentration of tensile stress is likely to damage the diaphragm 81 especially around a portion connected to the support member 80.

As illustrated in Fig. 2(c), the absolute pressure sensor AS includes a support member 80 and a diaphragm 81. The support member 80 has a recess 80c, and the diaphragm 81 is disposed on the support member 80 so as to cover the recess 80c. As illustrated in Fig. 2(d), when the pressure Pa of a medium is transferred to the diaphragm 81, the diaphragm 81 deforms toward the recess 80c. That is, if the pressure Pa is a positive pressure, the diaphragm 81 deforms into a concave shape. When the diaphragm 81 is deformed into a concave shape, compressive stress is concentrated on a surface on the support member 80 side of the diaphragm 81. When compressive stress is applied to the diaphragm 81, fracture stress is lower than when tensile stress is applied to the diaphragm 81.

Because of the fact described above, the pressure sensor 1 according to the present embodiment uses the absolute pressure sensor AS described in Figs. 2(c) and 2(d) as the first detection unit 10 and as the second detection unit 20. Then, the two absolute pressure sensors AS detect pressures of respective media that differ from each other, and the calculation unit 30 calculates the difference to obtain the relative pressure of the first medium with respect to the second medium.

Thus, the pressure sensor 1 according to the present embodiment, in which an absolute pressure sensor AS is used as the first detection unit 10 and as the second detection unit 20, can increase the pressure resistance of the entire pressure sensor 1 compared with a case of using a relative pressure sensor RS.

### (Specific Example of Pressure Sensor Module)

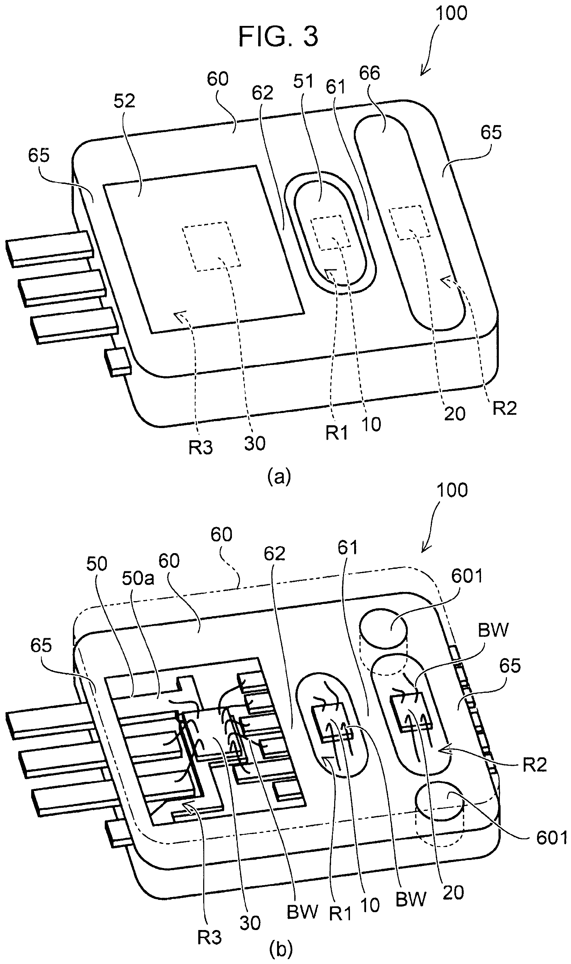

Figs. 3(a) and 3(b) are perspective views of a specific example of a pressure sensor module.

Fig. 3(a) illustrates an external view of a pressure sensor module 100, and Fig. 3(b) illustrates a partially broken view of an interior of the pressure sensor module 100.

The pressure sensor module 100 includes the pressure sensor 1 according to the present embodiment described above. The first detection unit 10, the second detection unit 20, and the calculation unit 30 are contained in the single package 60. Leads of a lead frame, which is the substrate 50, extend from the edge of the package 60. In the pressure sensor module 100, a single component can constitute the pressure sensor 1 including the first detection unit 10 and the second detection unit 20.

The pressure sensor module 100 has the introduction hole 602 on one side of the package 60 (on the first surface 50a side of the substrate 50). Introducing the first medium through the introduction hole 602 enables the pressure of the first medium to be transferred from the introduction hole 602 to the first detection unit 10.

In addition, the through hole 601 is disposed on the other side of the package 60 (the other side of the substrate 50 from the first surface 50a side). The through hole 601 penetrates from the other side of the package 60 through the package 60 to the second region R2.

If the one side (the side on which the introduction hole 602 is disposed) of the pressure sensor modules 100 in this configuration is attached to an object that contains the first medium, the relative pressure inside the object (first medium) with respect to the pressure outside the object (second medium) can be obtained.

In the pressure sensor module 100 of this type, the first detection unit 10 and the second detection unit 20 are contained in regions separated from each other (the first region R1 and the second region R2). Thus, the mixing of the first medium and the second medium can be suppressed even when either the first detection unit 10 or the second detection unit 20 is damaged. For example, when a pressure of a liquid, which is the first medium, is detected by using the first detection unit 10 and an abrupt pressure application from the liquid damages the first detection unit 10, the liquid stays in the first region R1 and does not flow out of the package 60.

### (Manufacturing Method)

Next, a method of manufacturing the pressure sensor module will be described.

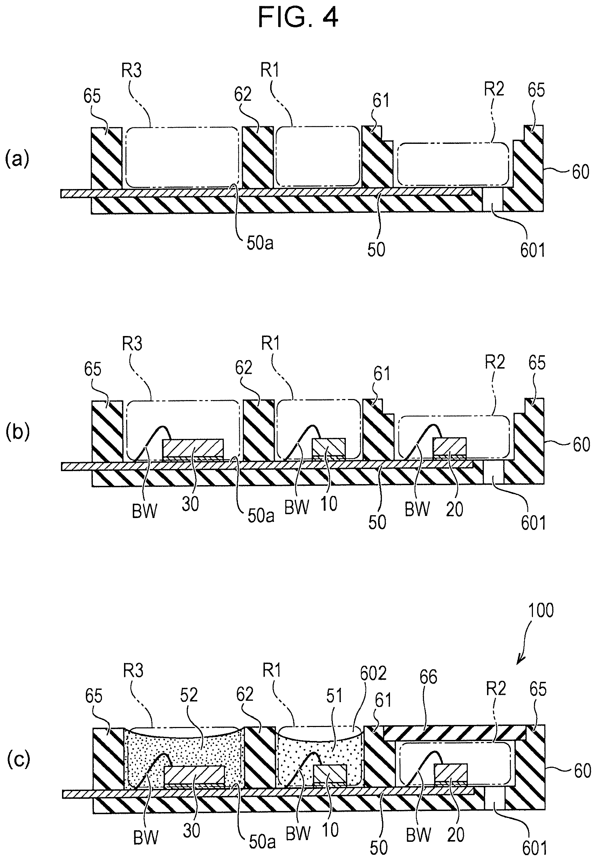

Figs. 4(a) to 4(c) are schematic cross-sectional views illustrating a method of manufacturing the pressure sensor module.

First, as illustrated in Fig. 4(a), the package 60 is formed around the substrate 50, such as a lead frame. The package 60 is formed by, for example, a transfer mold method. In this way, the outer frame 65 and the partitions 61 to 63 are formed on the first surface 50a side of the substrate 50. In the example illustrated in Fig. 4(a), the partition 61, the partition 62, and the outer frame 65 are formed on the substrate 50. The space between the partition 61 and the partition 62 constitutes the first region R1, the space between the outer frame 65 and the partition 61 constitutes the second region R2, and the space between the outer frame 65 and the partition 62 constitutes the third region R3. The package 60 has the through hole 601 connected to the second region R2.

Next, as illustrated in Fig. 4(b), the first detection unit 10, the second detection unit 20, and the calculation unit 30 are mounted on the first surface 50a of the substrate 50, and bonding wires BW for each of the components are connected to corresponding conduction pads of a lead frame or the like. The first detection unit 10 is mounted in the first region R1 on the substrate 50, and the second detection unit 20 is mounted in the second region R2 on the substrate 50. The calculation unit 30 is mounted in the third region R3 on the substrate 50. Each of the bonding wires BW is connected in a corresponding region among the first region R1, the second region R2, and the third region R3.

Then, as illustrated in Fig. 4(c), the protecting member 51 (made of, for example, a silicone resin) is filled in the first region R1, and the protecting member 52 (made of, for example, an epoxy resin) is filled in the third region R3. The lid 66 is attached to the upper portions of the partition 61 and the outer frame 65, both of which constitute the second region R2. Thus, the pressure sensor module 100 is completed.

In the pressure sensor module 100 according to the present embodiment, the first detection unit 10, the second detection unit 20, and the calculation unit 30 are disposed on the same surface of the substrate 50 (the first surface 50a) and wired via bonding wires BW on the same surface. Consequently, although the pressure sensor module 100 is constituted by a plurality of components, the component mounting and wiring can easily be performed.

In the manufacturing method illustrated in Figs. 4(a) to 4(c), the package 60 is formed around the substrate 50, and thereafter the first detection unit 10, the second region R2, and the calculation unit 30 are mounted and connected via the bonding wires BW. However, the first detection unit 10, the second detection unit 20, and the calculation unit 30 may be mounted on the substrate 50 and connected via the bonding wires BW, and thereafter the package 60 may be formed.

As described above, according to the present embodiment, it is possible to provide the pressure sensor 1 and the pressure sensor module 100 that have simple structures and are highly resistant to pressure.

The present embodiment has been described above, but the present invention is not limited to these examples. For example, the example in which the first detection unit 10, the second detection unit 20, and the calculation unit 30 are disposed on the same surface (the first surface 50a) has been described. But these components need not be disposed on the same surface and may be disposed on a surface having one or more steps. Modifications performed by those skilled in the art by appropriately adding an element to, removing an element from, or changing an element design of the embodiment described above or by appropriately combining features of the configuration examples of the embodiment are also within the scope of the present invention as long as the modifications do not depart from the spirit of the present invention.

### Reference Signs List

- 1: pressure sensor
- 10: first detection unit
- 20: second detection unit
- 30: calculation unit
- 50: substrate
- 50a: first surface
- 51, 52: protecting member
- 60: package
- 61, 62, 63: partition
- 65: outer frame
- 66: lid
- 80: support member
- 80c: recess
- 80h: introduction hole
- 81: diaphragm
- 100: pressure sensor module
- 601: through hole
- 602: introduction hole
- AS: absolute pressure sensor
- BW: bonding wire
- P1: first pressure
- P2: second pressure
- Pa, Pb: pressure
- R1: first region
- R2: second region
- R3: third region
- RS: relative pressure sensor

## Claims

1. A pressure sensor comprising:
a first detection unit that is disposed in a first region and that detects an absolute value of a pressure of a first medium;
a second detection unit that is disposed in a second region separated from the first region and that detects an absolute value of a pressure of a second medium that differs from the first medium; and
a calculation unit that performs a calculation to obtain a difference between a first pressure detected by the first detection unit and a second pressure detected by the second detection unit.

2. The pressure sensor according to Claim 1, further comprising:
a substrate; and
a package that covers at least a portion of the substrate and exteriors of the first detection unit, the second detection unit, and the calculation unit,
wherein the package includes a partition that separates the first region from the second region.

3. The pressure sensor according to Claim 2,
wherein the first detection unit, the second detection unit, and the calculation unit are disposed on a first surface side, the first surface side being a surface of the substrate.

4. The pressure sensor according to Claim 3,
wherein the package has a through hole that connects the second region to a space outside the package.

5. The pressure sensor according to Claim 4,
wherein the package has an introduction hole that is disposed on the first surface side of the substrate and that enables a pressure of the first medium to be introduced to the first region.

6. The pressure sensor according to any one of Claims 1 to 5,
wherein each of the first detection unit and the second detection unit includes a diaphragm that deforms into a concave shape and that detects a pressure.

7. The pressure sensor according to any one of Claims 1 to 6,
wherein the first medium is a liquid, and the second medium is a gas.

8. A pressure sensor module comprising:
a substrate;
a package that covers at least a portion of the substrate, that forms a first region and a second region on a first surface side, the first surface side being a surface of the substrate, and that includes a partition that separates the first region from the second region;
a first detection unit that is disposed in the first region and that detects an absolute value of a pressure of a first medium;
a second detection unit that is disposed in the second region and that detects an absolute value of a pressure of a second medium that differs from the first medium; and
a calculation unit that is disposed on the first surface side and that performs a calculation to obtain via a wiring pattern a difference between a first pressure detected by the first detection unit and a second pressure detected by the second detection unit,
wherein the package has a through hole that connects the second region to a space outside the package and an introduction hole that is disposed on the first surface side of the substrate and that enables a pressure of the first medium to be introduced to the first region.
